(19) Europäisches Patentamt
European Patent Office
Office européen des brevets

(11) **EP 4 265 646 B1**

(12) **EUROPEAN PATENT SPECIFICATION**

(45) Date of publication and mention
of the grant of the patent:
**16.10.2024   Bulletin 2024/42**

(21) Application number: **23167794.9**

(22) Date of filing: **13.04.2023**

(51) International Patent Classification (IPC):
**C08F 8/04** *(2006.01)*     **C08F 6/02** *(2006.01)*
**C08F 6/10** *(2006.01)*     **C08F 297/04** *(2006.01)*
**C08L 95/00** *(2006.01)*

(52) Cooperative Patent Classification (CPC):
(C-Sets available)
**C08F 6/02; C08F 6/10; C08F 8/04; C08F 297/04;
C08F 297/044;** C08L 95/00                    (Cont.)

(54) **CRUMB OF BLOCK COPOLYMER OR HYDROGENATED PRODUCT THEREOF AND ASPAHLT COMPOSITION**

GRANULAT AUS BLOCKCOPOLYMER ODER HYDRIERTEM PRODUKT DAVON UND ASPAHLT-ZUSAMMENSETZUNG

CHAPELURE DE COPOLYMÈRE SÉQUENCÉ OU PRODUIT HYDROGÉNÉ DE CELLE-CI ET COMPOSITION D'ASPHALT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **18.04.2022   JP 2022068368**
**03.04.2023   JP 2023060355**

(43) Date of publication of application:
**25.10.2023   Bulletin 2023/43**

(73) Proprietor: **Japan Elastomer Co., Ltd.
Tokyo 100-0006 (JP)**

(72) Inventors:
• **KAMEDA, Ippei
Tokyo, 1000006 (JP)**
• **YAMADA, Masato
Tokyo, 1000006 (JP)**

(74) Representative: **Strehl Schübel-Hopf & Partner
Maximilianstrasse 54
80538 München (DE)**

(56) References cited:
**EP-A1- 3 095 802     EP-A1- 3 095 803
US-A- 5 616 652**

(52) Cooperative Patent Classification (CPC): (Cont.)

C-Sets
**C08F 6/02, C08L 53/02;**
**C08F 6/02, C08L 53/025;**
**C08F 6/10, C08L 53/02;**
**C08F 6/10, C08L 53/025;**
**C08F 8/04, C08F 297/04;**
C08L 95/00, C08L 53/02;
C08L 95/00, C08L 53/025

C-Sets

**Description**

BACKGROUND OF THE INVENTION

Field of the Invention

The present invention relates to a crumb of a block copolymer or its hydrogenated product, and an asphalt composition.

Description of the Related Art

Block copolymers or their hydrogenated products, including polymer blocks mainly containing conjugated diene-based monomers and polymer blocks mainly containing vinyl aromatic-based monomers, have conventionally had not only elasticity comparable with that of vulcanized natural rubber or synthetic rubber at ordinary temperatures, even if not vulcanized, but also excellent processability comparable with that of thermoplastic resins at high temperatures, and therefore have been widely utilized in the fields of footwear, plastic modifiers, asphalt modifiers, viscous adhesives and the like, and for packaging materials for household products and home appliance components/industrial components, toys, and the like.

The block copolymers or their hydrogenated products are commercially available in various forms such as pellets and crumbs, and in particular, crumb-shaped block copolymers or their hydrogenated products are suitably used in the fields of, for example, asphalt modifiers and viscous adhesives because of being porous and being excellent in solubility.

Many methods for obtaining crumbs of such block copolymers or their hydrogenated products (hereinafter, also referred to as "block copolymer crumb") have been conventionally proposed.

For example, there is known a method for obtaining a polymer crumb having a water content of 1% by mass or less by removing a solvent from a block copolymer solution obtained by a polymerization process and a hydrogenation process, according to steam stripping, and then furthermore performing dehydration and drying with an extrusion dehydrator (see, for example, Japanese Patent No. 3310536 and Japanese Patent No. 6345703).

There are also proposed as methods for improving oil absorption ability of a hydrogenated block copolymer crumb having a high molecular weight, a dehydration/drying method with an extrusion dehydrator, in which the running temperature of an extruder for dehydration of a hydrogenated block copolymer crumb and the amount of moisture in slurry before loading to the extruder are modulated (see, for example, Japanese Patent No. 5591346), and furthermore a method in which a hydrogenated block copolymer crumb is subjected to drying treatment with a hot dryer under a specified temperature condition (see, for example, Japanese Patent No. 4798333 and Japanese Patent Laid-Open No. 11-315187).

There is known a block copolymer composition as an asphalt modifier, having bulk density, grain size distribution, and pore volume in specified ranges, being favorable in solubility in asphalt, and being excellent also in subsequent processability (see, for example, Japanese Patent No. 6483529).

SUMMARY OF THE INVENTION

While a procedure for an increase in specific area surface is mainly variously studied for improvements in solubility and oil absorption ability of a block copolymer crumb, other problems caused due to an increase in specific area surface, for example, deterioration in crumb-blocking ability and a reduction in transport efficiency, are exposed, and such points of view are neither mentioned, nor implemented. In other words, there is still a demand for a block copolymer crumb that is not only excellent in solubility and oil absorption ability, but also suppressed in blocking and excellent in transport efficiency.

The present inventors have made intensive studies about the shape of a block copolymer crumb in order to solve the above problems, and as a result, have found that the above problems can be solved by a specified shape, leading to completion of the present invention.

DETAILED DESCRIPTION OF THE PREFERRED EMBODIMENTS

Hereinafter, any mode for carrying out the present invention (hereinafter, referred to as "present embodiment") will be described in detail.

The block copolymer crumb of the present invention includes a polymer block A mainly containing a vinyl aromatic monomer unit, and includes a polymer block B mainly containing a conjugated diene monomer unit and/or a polymer block C consisting of a vinyl aromatic monomer unit and a conjugated diene monomer unit.

Herein, the "vinyl aromatic monomer unit" means a structure corresponding to one vinyl aromatic hydrocarbon compound, resulting from polymerization of a vinyl aromatic hydrocarbon compound. Examples of the vinyl aromatic hydrocarbon compound include, but not limited to, alkyl styrene such as styrene, $\alpha$-methyl styrene, p-methyl styrene and p-tert-butyl styrene; alkoxystyrene such as p-methoxystyrene; and vinyl naphthalene. Among them, the vinyl aromatic hydrocarbon is preferably styrene. Such vinyl aromatic hydrocarbon compounds may be used singly or in combinations of two or more kinds thereof.

The "conjugated diene monomer unit" means a structure resulting from polymerization of one conjugated diene compound. Such a conjugated diene compound is not particularly limited as long as it is diolefin having a conjugated double bond, and examples thereof include 1,3-butadiene, 2-methyl-1,3-butadiene (isoprene), 2,3-dimethyl-1,3-butadiene, 1,3-pentadiene, and 1,3-hexadiene. Among them, the conjugated diene compound is preferably 1,3-butadiene or isoprene in terms of availability. Furthermore, 1,3-butadiene is more preferable because use thereof tends to impart excellent heat aging resistance and light resistance. Such conjugated diene compounds may be used singly or in combinations of two or more kinds thereof.

(Block A)

The "polymer block A mainly containing a vinyl aromatic monomer unit" refers to a polymer block in which the proportion of the vinyl aromatic monomer unit in the entire polymer block A is more than 90% by mass, preferably 95% by mass or more, more preferably 98% by mass or more.

(Block B)

The "polymer block B mainly containing a conjugated diene monomer unit" refers to a polymer block in which the proportion of the conjugated diene monomer unit in the entire polymer block B is more than 90% by mass, preferably 95% by mass or more, more preferably 98% by mass or more.

(Block C)

The "polymer block C consisting of a vinyl aromatic monomer unit and a conjugated diene monomer unit" refers to a polymer block in which the mass ratio between the conjugated diene monomer unit and the vinyl aromatic monomer unit (conjugated diene monomer unit : vinyl aromatic monomer unit) in the entire polymer block C is in the range from 10:90 to 90:10. The range is preferably 10:90 to 85:15, more preferably 10:90 to 80:20. The vinyl aromatic hydrocarbon in the copolymer block C may be distributed uniformly or in a tapered manner. A region of the vinyl aromatic hydrocarbon uniformly distributed and/or a region of the vinyl aromatic hydrocarbon distributed in a tapered manner may be each plurally present in such a copolymer block C section. A plurality of regions different in content of the vinyl aromatic hydrocarbon may coexist in such a copolymer block C section.

The block ratio of the vinyl aromatic hydrocarbon incorporated in the block copolymer can be determined with a vinyl aromatic hydrocarbon polymer block component (provided that a vinyl aromatic hydrocarbon polymer component having an average degree of polymerization of about 30 or less is excluded) obtained according to a method of oxidative decomposition of a block copolymer by tertiary-butyl hydroperoxide with osmium tetraoxide as a catalyst (method described in I. M. KOLTHOFF, et al., J. Polym. Sci. 1, 429 (1946)), from the following expression.

Block ratio (% by mass) of vinyl aromatic hydrocarbon = (Mass of vinyl aromatic hydrocarbon polymer block in block copolymer/Mass of total vinyl aromatic hydrocarbon in block copolymer) $\times$ 100

The arrangement of the polymer block A and the polymer block B or C is not particularly prescribed, and it is preferably from the viewpoint of sufficient exertion of rubber elasticity of an elastomer to include a structure having a plurality of A blocks, such as A-B-A, A-C-A, B-A-B-A, B-A-C-A or A-B-C-A as a linear structure, or (A-B-)nX, (A-C-)nX, (B-A-B)nX or (B-A-C)nX as a coupling structure, in a molecule. (wherein each A independently represents the polymer block A, each B independently represents the polymer block B and each C independently represents the polymer block C; and each n independently represents an integer of 2 or more and each X independently represents a residue of a coupling agent.)

(Content of vinyl aromatic monomer unit)

The total amount of the vinyl aromatic monomer unit contained in the block copolymer of the present embodiment is preferably 20 to 50% by mass. The content of the vinyl aromatic monomer unit is in the range, resulting in a tendency to impart an excellent softening point of an asphalt composition in the case of compounding of the crumb to the asphalt composition. The content of a vinyl aromatic monomer unit in a block copolymer composition can be controlled by adjustment of the amount of a vinyl aromatic monomer added in polymerization reaction of the block copolymer of the present embodiment. The content of a vinyl aromatic monomer unit in a polymer composition can be measured by a method described in Examples below.

(Amount of vinyl bond)

A micro structure (ratio among cis, trans and vinyl) of the conjugated diene moiety in the block copolymer can be controlled with the use of a polar compound or the like described below. When 1,3-butadiene is used in such conjugated diene, the amount of a 1,2-vinyl bond is preferably 5 to 90% by mol, more preferably 5 to 80% by mol from the viewpoint of heat resistance and flexibility of the block copolymer, and is preferably 5 to 50% by mol from the viewpoint of the balance between the softening point and the melt viscosity of an asphalt composition.

When isoprene is used or 1,3-butadiene and isoprene are used in combination in such conjugated diene, the total amount of a 1,2-vinyl bond and a 3,4-vinyl bond is defined as the amount of a vinyl bond. The amount of a vinyl bond can be measured by a method described in Examples below.

(Hydrogenation ratio of block copolymer)

When the block copolymer is a hydrogenated product, the total hydrogenation ratio of an unsaturated double bond based on the conjugated diene compound can be arbitrarily selected depending on the purpose, and is not particularly limited. For example, when heat resistance is demanded during processing/molding or use, the hydrogenation ratio of an unsaturated double bond based on the conjugated diene compound in the block copolymer is preferably 70% by mol or more, more preferably 80% by mol or more, further preferably 90% by mol or more. For example, only one portion may be hydrogenated for the purpose of control of compatibility with other asphalt or the like, or control of the rate of crosslinking. When only one portion is hydrogenated, the hydrogenation ratio is 10% by mol or more and less than 80% by mol, or 15% by mol or more and less than 75% by mol, and is optionally recommended to be 20% by mol or more and less than 70% by mol. Furthermore, the hydrogenation ratio of a vinyl bond based on the conjugated diene before hydrogenation, with respect to a hydrogenated block copolymer, is preferably recommended to be 85% by mol or more, more preferably 90% by mol or more, further preferably 95% by mol or more, from the viewpoint that a composition excellent in thermal stability is obtained.

The hydrogenation ratio of the vinyl bond refers to the proportion of a hydrogenated vinyl bond based on the conjugated diene before hydrogenation, incorporated in the block copolymer.

The hydrogenation ratio of an aromatic double bond based on the vinyl aromatic hydrocarbon in the block copolymer is not particularly limited, and is preferably recommended to be 50% by mol or less, more preferably 30% by mol or less, further preferably 20% by mol or less. The hydrogenation ratio can be found by nuclear magnetic resonator (NMR).

(Molecular weight of block copolymer)

The molecular weight of the block copolymer is not particularly limited, and Mw is preferably in the range from 100000 to 500000 because of suitable use for an asphalt composition. The molecular weight is preferably 100000 or more from the viewpoint that a high softening point is easily achieved in use for an asphalt composition and the amount of the block copolymer added can also be saved, namely, the production time is shortened. The molecular weight is practicably preferably 500000 or less because the melt viscosity of an asphalt composition is not too high.

(MFR of block copolymer)

The MFR of the block copolymer of the present embodiment is less than 0.3 g/10 min under conditions of a test temperature of 200°C and a test load of 5 kgf. A MFR of less than 0.3 g/10 min allows a high softening point to be easily achieved in an asphalt composition.

(Method for producing block copolymer)

Examples of the method for producing the block copolymer include methods described in Japanese Patent Publication No. 36-19286, Japanese Patent Publication No. 43-17979, Japanese Patent Publication No. 46-32415, Japanese Patent Publication No. 49-36957, Japanese Patent Publication No. 48-2423, Japanese Patent Publication No. 48-4106, Japanese Patent Publication No. 51-49567, Japanese Patent Laid-Open No. 59-166518, and the like.

The solvent used in production of the block copolymer can be, for example, a hydrocarbon-based solvent, for example, an aliphatic hydrocarbon such as butane, pentane, hexane, isopentane, heptane, octane or isooctane, an alicyclic hydrocarbon such as cyclopentane, methylcyclopentane, cyclohexane, methylcyclohexane or ethylcyclohexane, or an aromatic hydrocarbon such as benzene, toluene, ethylbenzene or xylene. These may be used singly or as a mixture of two or more kinds thereof.

An organolithium compound for use in the production of the block copolymer is a compound where one or more lithium atoms are bound in a molecule, and examples thereof include ethyllithium, n-propyllithium, isopropyllithium, n-butyllithium, sec-butyllithium, tert-butyllithium, hexamethylenedilithium, butadienyldilithium, and isoprenyldilithium.

A polar compound and/or a randomizing agent can be used for the purposes of, for example, adjustment of the rate of polymerization in production of the block copolymer, modification of a micro structure of a conjugated diene moiety subjected to polymerization, and adjustment of the reactivity ratio between the conjugated diene and the vinyl aromatic hydrocarbon. Examples of the polar compound and/or the randomizing agent include an ether compound, an amine compound, a thioether compound, phosphoramide, a potassium salt or a sodium salt of alkylbenzenesulfonic acid, and potassium or sodium alkoxide. Examples of an appropriate ether compound include dimethyl ether, diethyl ether, diphenyl ether, tetrahydrofuran, diethylene glycol dimethyl ether, diethylene glycol dibutyl ether, dipropylene glycol dimethyl ether, ditetrahydrofurylpropane (DTHFP), and ethyl tetrahydrofurfuryl ether. The amine compound here used can be tertiary amine, trimethylamine, triethylamine, tetramethylethylenediamine, other cyclic tertiary amine, or the like. Examples of the phosphine and phosphoramide include triphenylphosphine and hexamethylphosphoramide.

The polymerization temperature in production of the block copolymer is preferably -10 to 150°C, more preferably 30 to 120°C. The time taken for polymerization varies depending on conditions, and is preferably within 48 hours, particularly suitably 0.5 to 10 hours. The atmosphere of the polymerization system is preferably an atmosphere of an inert gas such as a nitrogen gas. The polymerization pressure may be in a range sufficient for retention of the monomer and the solvent in a liquid phase in the above polymerization temperature range, and is not particularly limited. Furthermore, impurities that cause inactivation of a catalyst and a living polymer, for example, water, oxygen, and carbon dioxide are preferably not incorporated in the polymerization system.

The block copolymer may be hydrogenated. A hydrogenation catalyst is not particularly limited, and those conventionally known, (1) a supported heterogeneous hydrogenation catalyst where any metal such as Ni, Pt, Pd or Ru is supported on carbon, silica, alumina, or diatomaceous earth, (2) a so-called Ziegler hydrogenation catalyst where a transition metal salt such as an organic acid salt or an acetylacetone salt, of Ni, Co, Fe, or Cr, and a reducing agent such as organoaluminum are used, and (3) a homogeneous hydrogenation catalyst, for example, a so-called organometallic complex such as an organometallic compound of Ti, Ru, Rh, Zr or the like are used. As a specific hydrogenation catalyst, any hydrogenation catalyst described in Japanese Patent Publication No. 42-8704, Japanese Patent Publication No. 43-6636, Japanese Patent Publication No. 63-4841, Japanese Patent Publication No. 1-37970, Japanese Patent Publication No. 1-53851, and Japanese Patent Publication No. 2-9041 can be used. Examples of a preferable hydrogenation catalyst include a mixture with a titanocene compound and/or a reducible organometallic compound.

The titanocene compound here used can be a compound described in Japanese Patent Laid-Open No. 8-109219, and specific examples thereof include a compound having at least one ligand having a (substituted) cyclopentadienyl backbone, an indenyl backbone or a fluorenyl backbone, such as biscyclopentadienyl titanium dichloride or monopentamethylcyclopentadienyl titanium trichloride. Examples of the reducible organometallic compound include an organic alkali metal compound such as organolithium, an organomagnesium compound, an organoaluminum compound, an organoboron compound or an organozinc compound.

The hydrogenation reaction is preferably performed in the temperature range from 0 to 200°C, more preferably 30 to 150°C. The pressure of hydrogen used in the hydrogenation reaction is recommended to be preferably 0.1 to 15 MPa, more preferably 0.2 to 10 MPa, further preferably 0.3 to 5 MPa. The hydrogenation reaction time is preferably 3 minutes to 10 hours, more preferably 10 minutes to 5 hours. The hydrogenation reaction can be made with any of a batch process, a continuous process, or a combination thereof.

<Crumb of block copolymer or its hydrogenated product>

The block copolymer or its hydrogenated product obtained by the above method is recovered as a block copolymer crumb in a process described below.

The block copolymer crumb of the present embodiment has specified weight, aspect ratio, volume, and specific gravity. Herein, the "crumb" is one solid shape of a polymer, and is distinguished from a pellet and a powder.

The crumb refers to a small grain size block copolymer that is extruded/dried and cut in the state of being unmolten or partially molten, refers to one having a shape partially expanded, and is defined as one having a specific area surface of 0.1 mm$^2$/g or more.

<Shape of crumb>

The shape of the crumb of the present embodiment is described below. All the aspect ratio, the volume, the weight, the specific gravity, and the grain size of the crumb, described below, can be controlled by conditions of dehydration treatment and drying treatment in particularly Process 2 in a process for recovering the block copolymer crumb described below. Specifically, a shorter side length can be controlled by the shape of a die hole, and a longer side length can be controlled by the feed flow rate of the crumb, the total area of the hole, namely, the total opening area, the number of cutter blades, and the number of rotations. While the values of width and length are increased by expansion in extrusion, the expansion ratio can be controlled by the specific energy of an extruder.

(Aspect ratio with respect to crumb)

The average aspect ratio value per crumb of the present embodiment is 1.00 to 3.50, more preferably 1.00 to 3.00, further preferably 1.00 to 1.60.

The aspect ratio can be defined as the ratio of the longest side length to the shortest side length of the crumb, and can be measured and calculated by a method described in Examples below.

The aspect ratio can be controlled by setting the shape of the die hole to a circular shape having a diameter of 1 to 4 mm, setting the feed flow rate of the crumb to 2 to 4 t/h, setting the total area of the die opening portion to 1500 to 8000 mm$^2$, setting the number of cutter blades to 5 to 12, setting the number of cutter rotations to 500 to 3000 rpm, and setting specific energy to 0.12 kWh/kg or less. In particular, adjustment is preferably made by control of the number of cutter blades and the number of rotations, in terms of actual running. The number of cutter blades multiplied by the number of rotations is preferably in the range from 4500 to 36000 rpm, further preferably in the range from 10000 to 22000 rpm.

When the aspect ratio is more than 3.5, namely, in the case of a "long" crumb shape, the crumb is increased in mutual entanglement to cause deterioration in blocking resistance and also easy occurrence of a void during packing, thereby resulting in a reduction in bulk density, namely, a reduction in transport efficiency.

(Volume with respect to crumb)

The average volume value per crumb of the present embodiment is 18.0 to 110 mm$^3$. The lower limit is preferably 20.0 mm$^3$ or more, more preferably 25.0 mm$^3$ or more, further preferably 28.0 mm$^3$ or more. The upper limit is preferably 90.0 mm$^3$ or less, more preferably 80.0 mm$^3$ or less, further preferably 70.0 mm$^3$ or less, particularly preferably 60.0 mm$^3$ or less.

The volume of the block copolymer crumb can be calculated from the shortest side length and the longest side length of the crumb, by a method described in Examples below.

The volume can be controlled by setting the shape of the die hole to a circular shape having a diameter of 1 to 4 mm, setting the feed flow rate of the crumb to 2 to 4 t/h, setting the total area of the die opening portion to 1500 to 8000 mm$^2$, setting the number of cutter blades to 5 to 12, setting the number of cutter rotations to 500 to 3000 rpm, and setting specific energy to 0.12 kWh/kg or less. In particular, adjustment is preferably made by control of the number of cutter blades multiplied by the number of rotations within the range from 4500 to 36000 rpm and control of the diameter of the die hole, from the viewpoint of not only achievement of the above-mentioned aspect ratio, but also control of the volume. The shape of the die hole is particularly preferably a circular shape having a diameter of 2 to 3 mm.

The average volume value is 20.0 mm$^3$ or more, and thus the crumb is small in contact area and blocking resistance is favorable. In addition, blocking is suppressed and thus the apparent volume tends to be relatively small and the solubility in asphalt also tends to be high. When the volume is more than 110 mm$^3$, not only solubility in asphalt and oil absorption ability are inferior, but also a void easily occurs during packing, thereby resulting in a reduction in bulk density, namely, a reduction in transport efficiency.

(Weight with respect to crumb)

The average weight value per crumb of the present embodiment is 0.0080 to 0.0500 g. It is preferably 0.0100 or more, more preferably 0.0120. The upper limit value is preferably 0.0400 g, more preferably 0.0300 or less, further preferably 0.0200 g or less. The weight of the block copolymer crumb can be measured and calculated by a method described in Examples below. The weight can be controlled by setting the shape of the die hole to a circular shape having a diameter of 1 to 4 mm, setting the feed flow rate of the crumb to 2 to 4 t/h, setting the total area of the die opening portion to 1500 to 8000 mm$^2$, setting the number of cutter blades to 5 to 12, setting the number of cutter rotations to 500 to 3000 rpm, and setting specific energy to 0.12 kWh/kg or less. In particular, adjustment is preferably made by setting the number of cutter blades multiplied by the number of rotations to the range from 4500 to 36000 rpm, setting the shape of the die hole to a circular shape having a diameter of 2 to 3 mm, and controlling the specific energy, from the viewpoint of not only achievement of the above-mentioned aspect ratio and volume, but also control of the weight. The specific energy is more preferably 0.10 kWh/kg or less, particularly preferably 0.09 kWh/kg.

The weight is 0.0080 g or more, resulting in a sufficient bulk density, namely, a good transport efficiency. The weight is 0.0500 g or less, resulting in favorable solubility in asphalt and oil absorption ability in the case of compounding in an asphalt composition.

(Specific gravity with respect to crumb)

The specific gravity per crumb of the present embodiment is $2.0 \times 10^{-4}$ to $1.0 \times 10^{-3}$ g/mm$^3$, further preferably $2.0 \times 10^{-4}$ to $5.0 \times 10^{-4}$ g/mm$^3$.

The specific gravity of the block copolymer crumb can be calculated as a value obtained by dividing the average weight per crumb obtained by the above-mentioned method, by the average volume per crumb similarly obtained by the above-mentioned method. The specific gravity can be controlled by setting the shape of the die hole to a circular shape having a diameter of 1 to 4 mm, setting the feed flow rate of the crumb to 2 to 4 t/h, setting the total area of the die opening portion to 1500 to 8000 mm$^2$, setting the number of cutter blades to 5 to 12, setting the number of cutter rotations to 500 to 3000 rpm, and setting specific energy to 0.12 kWh/kg or less. In particular, adjustment is preferably made by control of the number of cutter blades multiplied by the number of rotations within the range from 4500 to 36000 rpm, setting the shape of the die hole to a circular shape having a diameter of 2 to 3 mm, and controlling the specific energy, from the viewpoint of not only achievement of the above-mentioned aspect ratio and volume, but also control of the specific gravity. The specific energy is more preferably 0.10 kWh/kg or less, particularly preferably 0.09 kWh/kg.

The specific gravity is $2.0 \times 10^{-4}$ or more, resulting in a tendency to impart a sufficient bulk density, namely, a high transport efficiency, and the specific gravity is $1.0 \times 10^{-3}$ g/mm$^3$ or less, resulting in good solubility in asphalt and oil absorption ability in the case of use in an asphalt composition.

(Particle size of crumb)

The block copolymer crumb of the present embodiment contains 41% by mass or more of a component passing through a sieve with an aperture of 3.35 mm relative to the entire crumb. The content is more preferably 80% by mass or more, further preferably 90% by mass or more. Herein, the ratio of the component passing through a sieve with an aperture of 3.35 mm is designated as the grain size.

The grain size of the crumb can be controlled by setting the shape of the die hole to a circular shape having a diameter of 1 to 4 mm, setting the feed flow rate of the crumb to 2 to 4 t/h, setting the total area of the die opening portion to 1500 to 8000 mm$^2$, setting the number of cutter blades to 5 to 12, setting the number of cutter rotations to 500 to 3000 rpm, and setting specific energy to 0.12 kWh/kg or less. In particular, adjustment is preferably made by control of the diameter of the die hole. The shape of the die hole is particularly preferably a circular shape having a diameter of 2 to 3 mm. If less than 41% by mass of the component passing through a sieve with an aperture of 3.35 mm is contained, not only a remarkable reduction in transport efficiency, but also deteriorations in blocking resistance, solubility in asphalt, and oil absorption ability are caused.

<Process for recovering crumb>

An aqueous slurry where a block copolymer crumb precursor is dispersed in water is obtained by loading a block copolymer solution into boiled water under stirring and removing a solvent by steam stripping for, if necessary, removal of a catalyst residue from the block copolymer solution.

The treatment method by steam stripping is not particularly limited, and a conventionally known method can be adopted.

A crumbing agent may be used during the steam stripping, and an anionic surfactant, a cationic surfactant, or a nonionic surfactant is commonly used as the crumbing agent.

The surfactant as the crumbing agent is commonly added in an amount of 0.1 to 3000 ppm relative to water in a stripping zone. Not only the surfactant, but also a water-soluble salt of a metal such as Li, Na, K, Mg, Ca, Al, or Zn can be used as a dispersion aid of the crumb.

The aqueous slurry where a block copolymer crumb precursor is dispersed in water, obtained in such a steam stripping process, can undergo the following process and be subjected to dehydration/drying treatment, and thus the block copolymer crumb of the present embodiment can be recovered.

The process for recovering the block copolymer crumb can be carried out by, but not limited to, for example, performing <Process 1> dehydration treatment, <Process 2> dehydration treatment and drying treatment, and <Process 3> drying treatment, described below. In <Process 2>, the dehydration treatment and the drying treatment may be each performed with an independent apparatus, or may be performed with a so-called integrated extrusion type dryer having a structure provided with a dehydration treatment device and a drying treatment device that are communicated with each other.

<Process 1>

The aqueous slurry where a block copolymer crumb precursor is dispersed in water is subjected to dehydration treatment, and a polymer is obtained where the water content is more than 60% by mass and 80% by mass or less and a polymer component not passing through a sieve having an aperture of 1.5 mm corresponds to 80% by mass or more of the entire polymer. For example, the aqueous slurry can be sieved by a vibration type screen to thereby dehydrate the slurry and adjust the water content. The temperature of the aqueous slurry is here set to 95°C or less, thereby decreasing shear heating and the die temperature in treatment of the crumb in a dry extruder in the next <Process 2>, reducing the energy taken for dehydration and drying, and facilitating obtainment of a desired crumb shape.

The dehydration treatment in <Process 1> can be performed with, for example, a rotary screen, a vibration screen, or a centrifugal dehydrator.

The water content in the crumb obtained in Process 1 is 60% by mass or more, resulting in a tendency to easily adjust the specific energy in Process 2, and the water content is 80% by mass or less, resulting in a tendency to decrease the remaining moisture in an extruder exit and stabilize a final crumb shape.

Furthermore, a crumb component not passing through a sieve having an aperture of 1.5 mm corresponds to 80% by mass or more of the entire crumb, thereby enabling dehydration and drying treatment in <Process 2> described below to be stably performed, and providing a block copolymer having a desired crumb shape (weight, aspect ratio, volume).

<Process 2>

The crumb, which is subjected to dehydration treatment in <Process 1> and has a predetermined water content, is subjected to dehydration treatment and drying treatment in <Process 2> and thus is formed into a crumb having a water content of 3 to 30% by mass, and is transferred to <Process 3> described below.

The water content of the crumb subjected to <Process 2> is preferably 3 to 25% by mass, more preferably 3 to 20% by mass.

The dehydration treatment and the drying treatment may be each performed with an independent apparatus, or may be performed with a so-called integrated extrusion type dryer having a structure provided with a dehydration treatment device and a drying treatment device that are communicated with each other.

The extrusion type dryer is an apparatus for performing the dehydration treatment and the drying treatment, and includes a dehydration treatment device and a drying treatment device, and the dehydration treatment device here adopted is an extruder (extruder-type water press) and the drying treatment device here adopted is, for example, a kneader type dryer or a screw type expander dryer. In particular, the dehydration treatment device is preferably configured to be provided with a single screw or multi screw, for example, twin screw type extruder and the drying treatment device is preferably configured to be provided with a screw type dryer, from the viewpoint of dehydration efficiency and workability.

A combination of a single screw type extruder and a screw type dryer is particularly preferable for mild control of dehydration of the crumb. When the feed flow rate of the crumb obtained in Process 1, to the extrusion type dryer, is defined as F [t/h], the number of rotations R in the extrusion type dryer is preferably set so that (F/R) is in the range from 0.5 to 1.5 t/rph, more preferably 0.6 to 1.4 t/rph, further preferably 0.8 to 1.2 t/rph. Such a range can allow for stable drying, namely, enables the water content in the crumb in an extrusion dryer exit to be controlled to 3 to 25% by mass.

The shape of the crumb of the present embodiment (aspect ratio, volume, weight, specific gravity, grain size) can be controlled by setting various conditions of the extrusion type dryer.

The extrusion dryer exit is provided with a plurality of dies each having a plurality of holes, and the crumb is continuously discharged through such each hole. The crumb continuously discharged is cut by a rotary cutter blade adjacent to the extrusion dryer exit, and the shape is then determined. The pressure is released in a die exit, and thus the crumb is expanded.

It is understood from the viewpoint that not only the width is controlled by the hole shape and the length is controlled by a so-called linear velocity obtained by dividing the feed flow rate by the total opening area, and the number of cutter blades and the number of rotations, but also the specific energy, namely, the power value of the entire extrusion dryer, taken per unit weight of the crumb, can be adopted as an index for the expansion ratio.

Conditions for obtaining the crumb of the present embodiment are preferably as follows.

The shape of the die hole is a circular shape preferably having a diameter of 1 mm to 4 mm, more preferably 1.5 mm to 3 mm.

When the diameter is small, there are tendencies to decrease the volume of the crumb and deteriorate blocking ability, and when the diameter is large, there are tendencies to easily increase the volume of the crumb and cause inferior transport efficiency, solubility in asphalt and oil absorption ability. While the diameter is preferably 4 mm or less from the viewpoint of the solubility, any other factor is also associated with control of the volume of the crumb and thus the diameter to be set to 4 mm or less and the volume of the crumb to be set to 110 mm$^3$ or less do not necessarily correspond to each other.

The sum of hole areas, namely, the total opening area is preferably 1500 to 8000 mm$^2$, more preferably 3000 to 5000 mm$^2$. When the sum is less than 1500 mm$^2$, the crumb tends to be longer to cause an increase in aspect ratio and deterioration in blocking ability. When the sum is more than 8000 mm$^2$, the crumb tends to be shorter to easily decrease the volume and thus deteriorate blocking ability. It is here noted that any other factor than the opening area is also associated with control of the length of the crumb and thus the lower limit value of the volume and the upper limit value of the area do not necessarily correlate.

Cutter blades are shaped to radially extend from the center, and are preferably disposed to be adjacent to the extrusion dryer exit. The number of the blades and the number of blade rotations are preferably set so that the number of cutter blades multiplied by the number of rotations is in the range from 4500 to 36000 rpm. When the product is less than 4500 rpm, the crumb tends to be longer to deteriorate blocking ability, and when the product is more than 36000 rpm, the crumb tends to be shorter to easily decrease the volume and thus deteriorate blocking ability. It is here noted that any other factor than the number of rotations is also associated with control of the volume and thus the product being 36000 rpm and the lower limit value of the volume do not necessarily correlate.

The specific energy of the extrusion dryer is preferably 0.12 kWh/kg or less, more preferably 0.10 kWh/kg or less, further preferably 0.09 kWh/kg or less. When the specific energy is more than 0.12 kWh/kg, the expansion ratio is easily higher and the specific gravity is easily lower, resulting in a tendency to deteriorate transport efficiency and blocking ability. It is here noted that any other factor than the specific energy is also associated with control of the specific gravity and thus the specific energy being 0.12 kWh/kg and the lower limit value of the specific gravity do not necessarily correlate.

<Process 3>

The crumb obtained in <Process 2> is subjected to drying treatment with a dry conveyor (equipment where, while vibration conveyance is made by a conveyor, hot air is blown from the bottom), and is formed into a crumb having a water content of 1% by mass or less.

The water content of the crumb subjected to <Process 3> is 1% by mass or less, preferably 0.95% by mass or less, more preferably 0.9% by mass or less.

As described above, the aqueous slurry is subjected to dehydration treatment by <Process 1> to provide a crumb where the water content is more than 60% by mass and 80% by mass or less and a crumb component not passing through a sieve having an aperture of 1.5 mm corresponds to 80% by mass or more of the entire crumb, dehydration treatment and drying treatment are performed according to <Process 2> to thereby provide a crumb having a water content of 3 to 30% by mass, and drying treatment is performed with a dry conveyor according to <Process 3> to thereby provide a crumb having a water content adjusted to 1% by mass or less.

(Asphalt composition)

The asphalt composition of the present embodiment includes the block copolymer crumb of the present embodiment, and asphalt. Furthermore, the compounding proportion of the block copolymer crumb in the asphalt composition of the present embodiment is preferably 0.5 parts by mass or more and 50 parts by mass or less, more preferably 1 part by mass or more and 30 parts by mass or less, further preferably 2 parts by mass or more and 20 parts by mass or less based on 100 parts by mass of the asphalt. When the compounding proportion of the polymer is 0.5 parts by mass or more, a favorable softening point tends to be obtained, and when the compounding proportion is 50 parts by mass or less, physical properties and viscosity (processability) tend to be well balanced.

<Asphalt>

Examples of the asphalt usable in the present embodiment include one obtained as a by-product (petroleum asphalt) in petroleum refining or one obtained as a natural product (natural asphalt), or a mixture thereof with a petroleum compound. The main component is one that is called bitumen. Specific examples include straight asphalt, semi-blown asphalt, blown asphalt, tar, pitch, cutback asphalt where oil is added, and asphalt emulsion. These may be mixed and used.

Examples of a suitable asphalt include straight asphalt preferably having a penetration (measured by JIS-K2207) of 30 (1/10 mm) or more and 300 (1/10 mm) or less, more preferably 40 (1/10 mm) or more and 200 (1/10 mm) or less, further preferably 45(1/10 mm) or more and 150 (1/10 mm) or less.

In the present embodiment, any petroleum resin can be, if necessary, further compounded. The type of the petroleum resin is not particularly limited, and, for example, an aliphatic petroleum resin such as a C5-based petroleum resin, an aromatic petroleum resin such as a C9-based petroleum resin, an alicyclic petroleum resin such as a dicyclopentadiene-based petroleum resin, a petroleum resin such as a C5/C9 copolymer-based petroleum resin, and a hydrogenated petroleum resin obtained by hydrogenation of such a petroleum resin can be used. The amount of the petroleum resin is not particularly limited, and is preferably 1 part by mass or more and 10 parts by mass or less, more preferably 2 parts by mass or more and 6 parts by mass or less based on 100 parts by mass of the asphalt.

In the present embodiment, any additive can be, if necessary, further compounded. The type of such any additive is not particularly limited as long as it is one commonly used for compounding of a thermoplastic resin or a rubber polymer. Examples of such any additive include, but not limited to, those described in "Chemicals for Rubber/Plastics" (by Rubber Digest, Co., Ltd., Japan), for example, inorganic fillers such as calcium carbonate, magnesium carbonate, magnesium hydroxide, calcium sulfate, barium sulfate, silica, clay, talc, mica, wollastonite, montmorillonite, zeolite, alumina, titanium oxide, magnesium oxide, zinc oxide, slug wool, and glass fibers, pigments such as carbon black and iron oxide, lubricants such as stearic acid, behenic acid, zinc stearate, calcium stearate, magnesium stearate, and ethylenebisstearamide, release agents, softening agents/plasticizers such as paraffin-based process oil, naphthene-based process oil, aromatic process oil, paraffin, organic polysiloxane, and mineral oil, antioxidants such as hindered phenol-based antioxidants and phosphorus-based heat stabilizers, hindered amine-based light stabilizers, benzotriazole-based ultraviolet absorbers, flame retardants, antistatic agents, reinforcing agents such as organic fiber, glass fiber, carbon fiber, and metal whiskers, colorants, other additives, or mixtures thereof. The amount of such any additive is not particularly limited, can be appropriately selected, and is usually 50 parts by mass or less based on 100 parts by mass of the asphalt.

Not only the block copolymer crumb of the present embodiment, but also any other polymer can be further compounded in the asphalt composition of the present embodiment. Such any other polymer is not particularly limited, and examples thereof include olefinic elastomers such as natural rubber, polyisoprene rubber, polybutadiene rubber, styrene-butadiene rubber, and ethylene-propylene copolymers; and olefinic thermoplastic elastomers, for example, olefinic polymers such as chloroprene rubber, acrylic rubber, ethylene-vinyl acetate copolymers, ethylene-ethyl acrylate copolymers, atactic polypropylene, and amorphous poly-alpha-olefin, blends of polypropylene and ethylene-propylene copolymers, blends of polypropylene and ethylene-propylene-diene terpolymers, and copolymers of ethylene and the like. These may be used singly or in combination.

An olefinic polymer and other polymer are preferably used in combination from the viewpoint of enhancements in heat aging resistance and softening point. Among them, an olefinic polymer having at least a propylene unit is more preferably used. The amount of such any other polymer added is preferably 5 to 40 parts by mass based on 100 parts by mass of the block copolymer crumb of the present embodiment.

When it is necessary to increase the solubility of each of the block copolymer crumb of the present embodiment and such any other polymer, in asphalt, improve adhesion resistance of the asphalt composition to an aggregate, enhance flow rutting resistance of an asphalt mixture, and enhance wear resistance, crosslinking is preferably made. Examples of a crosslinking agent include, but not limited to, sulfur-sulfur compound-based, phosphorus-based, organic peroxide-based, epoxy-based, isocyanate-based, resin-based, amine-based, metal chelate-based, and thiuram crosslinking agents. These may be used singly or in combinations of two or more kinds thereof. Two or more from the same series may be used. Among them, sulfur, a sulfur-based compound, and polyphosphoric acid are preferable from the viewpoint that the above effects are large and economic efficiency is obtained.

The asphalt composition of the present embodiment can be utilized in the road paving, roofing/waterproofing sheet, and sealant fields, and in particular, is suitably utilized in the road paving field. Among them, the asphalt composition for the road paving is suitable. The block copolymer crumb of the present embodiment is excellent in solubility in asphalt, namely, is dissolved in asphalt in a short time, and thus is enhanced in productivity.

Examples

Hereinafter, the present embodiment is specifically described with reference to Examples, but the present embodiment is not limited to these Examples at all.

Measurement methods of polymers and asphalt compositions in Examples and Comparative Examples are as follows.

<Content (styrene content) of vinyl aromatic monomer unit in polymer>

A solution of a measurement sample (each block copolymer produced in the following Production Example) in chloroform was prepared and the absorption at UV 254 nm by a phenyl group of styrene was detected with a spectrophotometer (V-550 manufactured by JASCO Corporation), and thus the amount (% by mass) of bound styrene was measured. The amount of bound styrene was determined as a value obtained by rounding to the nearest integer.

<Amount of vinyl bond in polymer and hydrogenation ratio of double bond in conjugated diene monomer unit>

The amount of a vinyl bond in each polymer, and the hydrogenation ratio of a double bond in a conjugated diene monomer unit were measured by nuclear magnetic resonance spectrum analysis (NMR) under the following conditions.

Both the amount of a vinyl bond and the hydrogenation ratio were measured by use of a polymer sample after hydrogenation reaction. The reaction liquid after hydrogenation reaction was subjected to precipitation in a large amount of methanol, and thus a polymer after hydrogenation was precipitated and recovered.

Next, the polymer after hydrogenation was extracted with acetone, and the extracted liquid was dried in vacuum and then used as a sample of 1H-NMR measurement.

The conditions of 1H-NMR measurement were as follows.

(Measurement conditions)

Measurement instrument: JNM-LA400 (manufactured by JEOL Ltd.)
Solvent: deuterated chloroform
Measurement sample: each product sampled before and after hydrogenation of polymer
Sample concentration: 50 mg/mL
Observation frequency: 400 MHz
Chemical shift standard: TMS (tetramethylsilane)
Pulse delay: 2.904 seconds
Number of scans: 64
Pulse width: 45°
Measurement temperature: 26°C

The amount of a vinyl bond and the hydrogenation ratio were each represented by "% by mol", and were each determined as a value obtained by rounding to the nearest integer.

<Weight average molecular weight>

Measurement was performed by gel permeation chromatography (GPC) with a measurement apparatus manufactured by Tosoh Corporation. The solvent here used was tetrahydrofuran, and the measurement temperature was 40°C. The molecular weight at a peak in a chromatogram was determined as the weight average molecular weight (molecular weight in terms of polystyrene) with a calibration curve (created with the molecular weight at the peak assigned to standard polystyrene) determined from measurement of commercially available standard polystyrene.

(Measurement conditions)

GPC: HLC-8320GPC (manufactured by Tosoh Corporation)
Detector: RI
Column: PLgel Column MiniMix-C 4.6 mm$\phi$ × 300 mm (manufactured by Agilent Technologies, Inc.)
Solvent: THF
Flow rate: 0.6 mL/min
Concentration: 0.5 mg/mL
Column temperature: 40°C
Amount injected: 20 $\mu$L

The weight average molecular weight was determined as a value obtained by rounding off thousands place.

<Melt flow rate (MFR)>

The MFR was measured according to the A method of JIS-K7210 under conditions corresponding to G conditions of ASTM, of a test temperature of 200°C and a test load of 5 kgf. The value was obtained by rounding to one decimal place.

<Measurement of shape of crumb>

First, whether the shape of the crumb was of a tower type or a tank type in simulation of the shape as a cylinder form was determined, and the volume was determined according to the following rule. Here, the tower type refers to a shape having a height more than the diameter of the bottom and the tank type refers to a shape having a larger diameter of the bottom than the height, in simulation of the shape as a cylinder form. Thirty of such crumbs were randomly extracted, and were each subjected to measurement of the length and the width with a caliper. The longest side length was defined as the length and the shortest side length was defined as the width in both cases of the tower type and the tank type. Thirty of such crumbs were randomly extracted similarly, and were each subjected to measurement of the weight with an electronic balance. The length and the width were represented by the unit "mm", and were each determined as a value obtained by rounding to one decimal place. The weight was represented by the unit "g", and was determined as a value obtained by rounding to four decimal places.

After measurement of the length, the width and the weight, the measurement results were subjected to an outlier test. The outlier test was performed with a Smirnov-Grubbs test. The average value and the dispersion of 30 pieces of measurement data were each calculated by calculating the test statistic t and the p value at t, and excluding one where the p value was 0.05 or less (5% or less), as an abnormal value, to thereby calculate the average value.

<Method for calculating aspect ratio of crumb>

The aspect ratio of the crumb was calculated from the length and the width in the shape measurement, according to the following expression.
Aspect ratio = Length/Width

The length and the width here used were respectively the average length value and the average width value calculated by the above-mentioned method. The aspect ratio was determined as a value obtained by rounding to two decimal places.

<Method for calculating volume of crumb>

The volume of the crumb was calculated from the length and the width of the crumb, according to the following expressions.

$$\text{Case of tower type: volume of crumb} = \text{pi} \times (\text{width}/2)^2 \times \text{length}$$

$$\text{Case of tank type: volume of crumb} = \text{pi} \times (\text{length}/2)^2 \times \text{width}$$

The length and the width here used were respectively the average length value and the average width value calculated by the above-mentioned method. The volume was represented by the unit "mm$^3$", and was determined as a value obtained by rounding to one decimal place.

<Method for calculating specific gravity of crumb>

The specific gravity of the crumb was calculated from the weight and the volume in the shape measurement, according to the following expression.

$$\text{Specific gravity} = \text{Weight}/\text{Volume}$$

The weight here used was an average weight value obtained by calculation according to the above-mentioned method. The specific gravity was represented by the unit "g/mm$^3$", and was determined as a value obtained by rounding to five decimal places.

<Evaluation of grain size of crumb>

A sieve shaker (Octagon Digital, manufactured by Seishin Enterprise Co., Ltd.) was used, 300 g of the crumb was loaded from the top of a sieve with an aperture of 3.35 mm and vibrated for 15 minutes, the amount of the remaining crumb on and the amount of the crumb passing through each sieve were measured, and the proportion (% by mass) of the crumb passing through such a sieve with an aperture of 3.35 mm was calculated. The grain size was represented by "% by mass", and was determined as a value obtained by rounding to the nearest integer.

<Evaluation of transport efficiency>

The resulting block copolymer crumb was packed in a flexible container having a width 110 cm, a length of 110 cm, and a height of 215 cm until the height of the crumb packed reached 190 cm. Herein, the total weight of the block copolymer crumb was measured. The evaluation criteria were as follows, ratings A to C were defined as passed, and in particular, and ratings A and B were regarded as excellent transport efficiency. During the packing, the upper portion was flatly leveled, but no operation of pushing was performed.

A: 700 kg or more
B: 600 kg to 700 kg
C: 550 kg to 600 kg
D: less than 550 kg

<Evaluation of blocking ability>

The container where the block copolymer crumb produced for evaluation of transport efficiency was packed was stored at about 30°C for three months, and then pulled up, and a circular hole having a diameter of 45 cm placed on the central portion of the lower surface of the container was released to observe and evaluate the state of discharge. The evaluation criteria were as follows, ratings A to C were defined as passed, and in particular, and ratings A and B were regarded as excellent blocking ability.

A: discharging is naturally initiated without any clogging at the same time as releasing, and the whole can be discharged.
B: clogging slightly occurs during discharging, and the whole can be discharged by slightly swinging any location of the container.
C: clogging heavily occurs during discharging, and the whole can be discharged by vigorously swinging any location of the container.
D: discharging cannot be made.

<Production of asphalt composition>

In a 750-mL metal can was loaded 350 g of asphalt (straight asphalt 80-100 (manufactured by Petronas)), and the metal can was sufficiently immersed in an oil bath at 180°C. Next, each block copolymer was loaded in molten asphalt in small batches under stirring so as to be in an amount of 4% by mass.
After each material was completely loaded, the resultant was stirred at a rotational speed of 3000 rpm for 60 minutes, thereby preparing an asphalt composition.

<Evaluation of solubility in asphalt>

In the course of dissolution in asphalt, the solubility was evaluated based on the dissolution time, according to the following criteria. The evaluation criteria were as follows, ratings A to C were defined as passed, and in particular, and ratings A and B were regarded as excellent solubility in asphalt.

A: a dissolution time of less than 15 minutes
B: a dissolution time of 15 minutes or more and less than 30 minutes
C: a dissolution time of 30 minutes or more and less than 60 minutes
D: a dissolution time of 60 minutes or more

<Evaluation of oil absorption ability>

Ten g of the resulting block copolymer crumb was placed in a bag made of a 200-mesh wire net. Two L of PW90 was placed in a 3-L polybeaker, and the entire polybeaker was subjected to temperature regulation to 35°C in a warm water bath. When PW90 was stabilized at 35°C, the entire wire net bag with the produced crumb placed was immersed in PW90 for 1 minute. Thereafter, the bag was taken out rapidly, and left to still stand on a waste cloth for 1.5 hours.

After the still standing, molded plates (3 mm thickness_30 cm square_2 plates) and 10-cm$\varphi$ paper filters (two-ply (upper and lower)) were prepared, and a load of 2.0 kgf was applied for 3 minutes. Thereafter, the bag was released, and the crumb absorbing oil was recovered. The weight of the crumb was measured before and after the oil absorption, and the amount of oil absorption was calculated according to the following expression.

Amount of oil absorption (phr) = (Weight of crumb after oil absorption - Weight of crumb before oil absortion)/Weight of crumb before oil absorption

The evaluation criteria were as follows, ratings A to C were defined as passed, and in particular, and ratings A and B were regarded as excellent oil absorption ability.

      A: an amount of oil absorption of 300 phr or more
      B: an amount of oil absorption of 225 phr or more and less than 300 phr
      C: an amount of oil absorption of 150 phr or more and less than 225 phr
      D: an amount of oil absorption of less than 150 phr

<Production of block copolymer>

<Preparation of hydrogenation catalyst>

A reaction container purged with nitrogen was charged with 100 L of cyclohexane dried and purified, 10 mol of bis($\eta$5-cyclopentadienyl)titanium dichloride was added, a solution containing 20 mol of trimethylaluminum in n-hexane was added under sufficient stirring, and the reaction was made at room temperature for about 3 days.

<Production Example 1>

A tank type reactor equipped with a stirring apparatus and a jacket, having an inner volume of 7 m3, was used to perform polymerization by the following method.

First step:

After the reactor was charged with 3 t of cyclohexane and the temperature was adjusted to 40°C, 0.05 mol of N,N,N',N'-tetramethylethylenediamine (hereinafter, referred to as "TMEDA") was added based on 1 mol of n-butyllithium, and thereafter 10 parts by mass of styrene as a monomer was added over about 3 minutes.

Second step:

After the solution temperature in the container was adjusted to 40°C, 0.054 parts by mass of n-butyllithium was added based on 100 parts by mass of the entire monomer, and polymerization was made for 30 minutes.

Third step: Next, 58 parts by mass of butadiene and 22 parts by mass of styrene were each continuously fed to the reactor at a certain rate over 6 minutes. Thereafter, the reaction was made for 60 minutes. The reactor internal temperature was adjusted so as to be about 80°C during the reaction.

Fourth step:

Thereafter, 10 parts by mass of styrene as a monomer was further added over about 3 minutes to perform reaction for 30 minutes with the reactor internal temperature being adjusted to about 80°C, and then 0.9 mol of methanol was added based on 1 mol of n-butyllithium.

Herein, feeding was made so that the entire monomer was in an amount of 15 parts by mass based on 100 parts by mass of cyclohexane.

Fifth step:

Next, 100 ppm of the hydrogenation catalyst based on the mass of the polymer was added as titanium to perform hydrogenation reaction at a hydrogen pressure of 0.7 MPa and a temperature of 80°C. When the hydrogenation ratio reached 95%, feeding of hydrogen was stopped, and then 0.25% by mass of octadecyl-3-(3,5-di-t-butyl-4-hydroxyphenyl)propionate as a stabilizer was added based on the mass of the polymer to thereby obtain a block copolymer solution in cyclohexane.

The obtained block copolymer solution in cyclohexane was subjected to steam stripping at 95°C for 1 hour. The steam stripping was performed by addition of a styrene-maleic acid copolymer sodium salt as a crumbing agent.

The concentration of the block copolymer crumb precursor in the resulting aqueous slurry was 5% by mass.

Next, the resulting aqueous slurry containing the block copolymer crumb precursor was sent to a vibration type screen having an aperture of 1.5 mm, and dehydration treatment (<Process 1>) was performed.

The block copolymer crumb precursor was subjected to dehydrate and drying treatment (<Process 2>) with a two-stage single screw extrusion dryer where a dehydration treatment device and a drying treatment device were integrated. Forty two dies each having a hole diameter of 3 mm and a number of holes of 15 were disposed on an extrusion dryer exit. The total area of the opening portion was 4453 mm$^2$. A cutter where ten cutter blades were radially disposed was used, and the number of rotations was set to 2200 rpm.

The block copolymer was set to a rate of feeding of 3.4 t/h, and continuously fed to the extrusion dryer, to thereby continuously discharge a crumb from a dry extruder exit. The number of screw rotations was adjusted so that the specific energy was 0.12 kWh/kg.

Thereafter, the block copolymer crumb obtained above was subjected to drying treatment by hot air at about 90°C with a dry conveyor (<Process 3>), and block copolymer crumb 1 was recovered. The polymerization conditions and analysis results of block copolymer crumb 1 are shown in Table 1 and the conditions in Process 2 are shown in Table 2.

<Production Examples 2 to 11 and 19 to 23>

Block copolymer crumbs 2 to 11 and 19 to 23 were obtained in the same manner as in Production Example 1 except that the conditions in Process 2 were changed as in Table 2. The polymerization conditions and analysis results of the block copolymer crumbs are shown in Table 1.

<Production Example 12>

Block copolymer crumb 12 was obtained in the same manner as in Production Example 1 except that feeding of hydrogen was stopped when the hydrogenation ratio reached 70%, and the conditions in Process 2 were changed as in Table 2. The polymerization conditions and analysis results of block copolymer crumb 12 are shown in Table 1.

<Production Example 13>

A tank type reactor equipped with a stirring apparatus and a jacket, having an inner volume of 7 m3, was used to perform polymerization by the following method.

First step:

After the reactor was charged with 3 t of cyclohexane and the temperature was adjusted to 40°C, 30 parts by mass of styrene as a monomer was added over about 3 minutes.

Second step:

After the solution temperature in the container was adjusted to 40°C, 0.144 parts by mass of n-butyllithium was added based on 100 parts by mass of the entire monomer, and polymerization was made for 30 minutes.

Third step:

Next, 70 parts by mass of butadiene was continuously fed to the reactor at a certain rate over 6 minutes. Thereafter, the reaction was made for 60 minutes. The reactor internal temperature was adjusted so as to be about 80°C during the reaction.

Herein, feeding was made so that the entire monomer was in an amount of 15 parts by mass based on 100 parts by mass of cyclohexane.

Fourth step:

Thereafter, 0.35 mol of dimethyldichlorosilane as a coupling agent was added based on 1 mol of n-butyllithium to perform reaction for 10 minutes with the reactor internal temperature being adjusted to about 80°C.

Fifth step:

Next, 0.25% by mass of octadecyl-3-(3,5-di-t-butyl-4-hydroxyphenyl)propionate as a stabilizer was added based on the mass of the polymer, to thereby obtain a block copolymer solution in cyclohexane.

The obtained block copolymer solution in cyclohexane was subjected to steam stripping at 95°C for 1 hour. The steam stripping was performed by addition of a styrene-maleic acid copolymer sodium salt as a crumbing agent.

The concentration of the block copolymer crumb precursor in the resulting aqueous slurry was 5% by mass.

Next, the resulting aqueous slurry containing the block copolymer crumb precursor was sent to a vibration type screen having an aperture of 1.5 mm, and dehydration treatment (<Process 1>) was performed.

Thereafter, block copolymer crumb 13 was obtained in the same manner as in Production Example 1 except that conditions were changed as in Table 2. The polymerization conditions and analysis results of block copolymer crumb 13 are shown in Table 1.

<Production Example 14>

Block copolymer crumb 14 was obtained in the same manner as in Production Example 13 except that the types and amounts of monomers and additives are changed as in Table 1 and the conditions in Process 2 were changed as in Table 2. The polymerization conditions and analysis results of block copolymer crumb 14 are shown in Table 1.

<Production Example 15>

A tank type reactor equipped with a stirring apparatus and a jacket, having an inner volume of 7 m3, was used to perform polymerization by the following method.

First step:

After the reactor was charged with 3 t of cyclohexane and the temperature was adjusted to 40°C, 0.05 mol of N,N,N',N'-tetramethylethylenediamine (hereinafter, referred to as "TMEDA") was added based on 1 mol of n-butyllithium, and thereafter 20 parts by mass of styrene as a monomer was added over about 3 minutes.

Second step:

After the solution temperature in the container was adjusted to 40°C, 0.103 parts by mass of n-butyllithium was added based on 100 parts by mass of the entire monomer, and polymerization was made for 30 minutes.

Third step:

Next, 58 parts by mass of butadiene and 22 parts by mass of styrene were each continuously fed to the reactor at a certain rate over 6 minutes. Thereafter, the reaction was made for 60 minutes. The reactor internal temperature was adjusted so as to be about 80°C during the reaction. Herein, feeding was made so that the entire monomer was in an amount of 15 parts by mass based on 100 parts by mass of cyclohexane.

Fourth step:

Thereafter, 0.18 mol of tetramethoxysilane as a coupling agent was added based on 1 mol of n-butyllithium to perform reaction for 10 minutes with the reactor internal temperature being adjusted to about 80°C, and then 0.3 mol of methanol was added based on 1 mol of n-butyllithium.

Fifth step:

Next, 100 ppm of the hydrogenation catalyst based on the mass of the polymer was added as titanium to perform hydrogenation reaction at a hydrogen pressure of 0.7 MPa and a temperature of 80°C. When the hydrogenation ratio reached 70%, feeding of hydrogen was stopped, and then 0.25% by mass of octadecyl-3-(3,5-di-t-butyl-4-hydroxyphenyl)propionate as a stabilizer was added based on the mass of the polymer to thereby obtain a block copolymer solution in cyclohexane.

The obtained block copolymer solution in cyclohexane was subjected to steam stripping at 95°C for 1 hour. The steam stripping was performed by addition of a styrene-maleic acid copolymer sodium salt as a crumbing agent.

The concentration of the block copolymer crumb precursor in the resulting aqueous slurry was 5% by mass.

Next, the resulting aqueous slurry containing the block copolymer crumb precursor was sent to a vibration type screen having an aperture of 1.5 mm, and dehydration treatment (<Process 1>) was performed.

Thereafter, block copolymer crumb 15 was obtained in the same manner as in Production Example 1 except that conditions were changed as in Table 2. The polymerization conditions and analysis results of block copolymer crumb 15 are shown in Table 1.

<Production Example 16>

Block copolymer crumb 16 was obtained in the same manner as in Production Example 1 except that the polymerization conditions were changed as in Table 1 and the conditions in Process 2 were changed as in Table 2. The polymerization conditions and analysis results of block copolymer crumb 16 are shown in Table 1.

<Production Example 17>

A tank type reactor equipped with a stirring apparatus and a jacket, having an inner volume of 7 m3, was used to perform polymerization by the following method.

First step:

After the reactor was charged with 3 t of cyclohexane and the temperature was adjusted to 40°C, 15 parts by mass of styrene as a monomer was added over about 5 minutes.

Second step:

After the solution temperature in the container was adjusted to 40°C, 0.059 parts by mass of n-butyllithium was added based on 100 parts by mass of the entire monomer, and polymerization was made for 30 minutes.

Third step:

Next, 70 parts by mass of butadiene was continuously fed to the reactor at a certain rate over 6 minutes. Thereafter, the reaction was made for 60 minutes. The reactor internal temperature was adjusted so as to be about 80°C during the reaction.

Herein, feeding was made so that the entire monomer was in an amount of 15 parts by mass based on 100 parts by mass of cyclohexane.

Fourth step:

Thereafter, 15 parts by mass of styrene as a monomer was further added over about 4 minutes to perform reaction for 30 minutes with the reactor internal temperature being adjusted to about 80°C, and then 0.9 mol of methanol was added based on 1 mol of n-butyllithium.

Herein, feeding was made so that the entire monomer was in an amount of 15 parts by mass based on 100 parts by mass of cyclohexane.

Fifth step:

Next, 0.25% by mass of octadecyl-3-(3,5-di-t-butyl-4-hydroxyphenyl)propionate as a stabilizer was added based on the mass of the polymer, to thereby obtain a block copolymer solution in cyclohexane.

The obtained block copolymer solution in cyclohexane was subjected to steam stripping at 95°C for 1 hour. The steam stripping was performed by addition of a styrene-maleic acid copolymer sodium salt as a crumbing agent.

The concentration of the block copolymer crumb precursor in the resulting aqueous slurry was 5% by mass.

Next, the resulting aqueous slurry containing the block copolymer crumb precursor was sent to a vibration type screen having an aperture of 1.5 mm, and dehydration treatment (<Process 1>) was performed.

Thereafter, block copolymer crumb 17 was obtained in the same manner as in Production Example 1 except that conditions were changed as in Table 2. The polymerization conditions and analysis results of block copolymer crumb 17 are shown in Table 1.

<Production Example 18>

Block copolymer crumb 18 was obtained in the same manner as in Production Example 17 except that the conditions in Process 2 were changed as in Table 2. The polymerization conditions and analysis results of block copolymer crumb 18 are shown in Table 1.

<Production Example 24>

A tank type reactor equipped with a stirring apparatus and a jacket, having an inner volume of 7 m3, was used to perform polymerization by the following method.

First step:

After the reactor was charged with 3 t of cyclohexane and the temperature was adjusted to 40°C, 30 parts by mass of styrene as a monomer was added over about 3 minutes.

Second step:

After the solution temperature in the container was adjusted to 40°C, 0.15 parts by mass of n-butyllithium was added based on 100 parts by mass of the entire monomer, and polymerization was made for 30 minutes.

Third step:

Next, 70 parts by mass of butadiene was continuously fed to the reactor at a certain rate over 6 minutes. Thereafter, the reaction was made for 60 minutes. The reactor internal temperature was adjusted so as to be about 80°C during the reaction.

Herein, feeding was made so that the entire monomer was in an amount of 15 parts by mass based on 100 parts by mass of cyclohexane.

Fourth step:

Thereafter, 0.25 mol of dimethyldichlorosilane as a coupling agent was added based on 1 mol of n-butyllithium to perform reaction for 10 minutes with the reactor internal temperature being adjusted to about 80°C.

Fifth step:

Next, 0.25% by mass of octadecyl-3-(3,5-di-t-butyl-4-hydroxyphenyl)propionate as a stabilizer was added based on the mass of the polymer, to thereby obtain a block copolymer solution in cyclohexane.

The obtained block copolymer solution in cyclohexane was subjected to steam stripping at 95°C for 1 hour. The steam stripping was performed by addition of a styrene-maleic acid copolymer sodium salt as a crumbing agent.

The concentration of the block copolymer crumb precursor in the resulting aqueous slurry was 5% by mass.

Next, the resulting aqueous slurry containing the block copolymer crumb precursor was sent to a vibration type screen having an aperture of 1.5 mm, and dehydration treatment (<Process 1>) was performed.

Thereafter, block copolymer crumb 24 was obtained in the same manner as in Production Example 1 except that conditions were changed as in Table 2. The polymerization conditions and analysis results of block copolymer crumb 24 are shown in Table 1.

<Production Examples 25 and 26>

Block copolymer crumbs 25 and 26 were obtained in the same manner as in Production Example 1 except that the polymerization conditions were changed as in Table 1 and the conditions in Process 2 were changed as in Table 2. The polymerization conditions and analysis results of the block copolymer crumbs are shown in Table 1.

<Production Example 27>

A tank type reactor equipped with a stirring apparatus and a jacket, having an inner volume of 7 m3, was used to perform polymerization by the following method.

First step:

After the reactor was charged with 3 t of cyclohexane and the temperature was adjusted to 40°C, 0.3 mol of N,N,N',N'-tetramethylethylenediamine (hereinafter, referred to as "TMEDA") was added based on 1 mol of n-butyllithium, and thereafter 24 parts by mass of styrene as a monomer was added over about 3 minutes.

Second step:

After the solution temperature in the container was adjusted to 40°C, 0.15 parts by mass of n-butyllithium was added based on 100 parts by mass of the entire monomer, and polymerization was made for 30 minutes.

Third step:

Next, 76 parts by mass of butadiene was continuously fed to the reactor at a certain rate over 6 minutes. Thereafter, the reaction was made for 60 minutes. The reactor internal temperature was adjusted so as to be about 80°C during the reaction. Herein, feeding was made so that the entire monomer was in an amount of 15 parts by mass based on 100 parts by mass of cyclohexane.

Fourth step:

Thereafter, 0.11 mol of tetramethoxysilane as a coupling agent was added based on 1 mol of n-butyllithium to perform reaction for 10 minutes with the reactor internal temperature being adjusted to about 80°C, and then 0.7 mol of methanol was added based on 1 mol of n-butyllithium.

Next, 100 ppm of the hydrogenation catalyst based on the mass of the polymer was added as titanium to perform hydrogenation reaction at a hydrogen pressure of 0.7 MPa and a temperature of 80°C. When the hydrogenation ratio reached 50%, feeding of hydrogen was stopped, and then 0.25% by mass of octadecyl-3-(3,5-di-t-butyl-4-hydroxyphenyl)propionate as a stabilizer was added based on the mass of the polymer to thereby obtain a block copolymer solution in cyclohexane.

The obtained block copolymer solution in cyclohexane was subjected to steam stripping at 95°C for 1 hour. The steam stripping was performed by addition of a styrene-maleic acid copolymer sodium salt as a crumbing agent.

The concentration of the block copolymer crumb precursor in the resulting aqueous slurry was 5% by mass.

Next, the resulting aqueous slurry containing the block copolymer crumb precursor was sent to a vibration type screen having an aperture of 1.5 mm, and dehydration treatment (<Process 1>) was performed.

Thereafter, block copolymer crumb 27 was obtained in the same manner as in Production Example 1 except that conditions were changed as in Table 2. The polymerization conditions and analysis results of block copolymer crumb 27 are shown in Table 1.

<Examples 1 to 18>

The evaluation results of block copolymer crumbs 1 to 18 are shown in Table 3.

<Comparative Examples 1 to 5>

The evaluation results of block copolymer crumbs 19 to 23 are shown in Table 3.

<Comparative Examples 6 to 9>

The evaluation results of block copolymer crumbs 24 to 27 are shown in Table 3.

[Table 1]

Table 1

| | Production Example 1 | Production Example 2 | Production Example 3 | Production Example 4 | Production Example 5 | Production Example 6 | Production Example 7 | Production Example 8 | Production Example 9 | Production Example 10 | Production Example 11 | Production Example 12 | Production Example 13 | Production Example 14 |
|---|---|---|---|---|---|---|---|---|---|---|---|---|---|---|
| Block copolymer crumb | 1 | 2 | 3 | 4 | 5 | 6 | 7 | 8 | 9 | 10 | 11 | 12 | 13 | 14 |
| Amount (parts by mass) of styrene monomer in first step | 10 | 10 | 10 | 10 | 10 | 10 | 10 | 10 | 10 | 10 | 10 | 10 | 30 | 30 |
| Amount (mol/Li) of TMEDA added in first step | 0.05 | 0.05 | 0.05 | 0.05 | 0.05 | 0.05 | 0.05 | 0.05 | 0.05 | 0.05 | 0.05 | 0.05 | 0 | 0 |
| Amount (phm) of Bu-Li added in second step | 0.054 | 0.054 | 0.054 | 0.054 | 0.054 | 0.054 | 0.054 | 0.054 | 0.054 | 0.054 | 0.054 | 0.054 | 0.144 | 0.13 |
| Amount (parts by mass) of butadiene monomer in third step | 58 | 58 | 58 | 58 | 58 | 58 | 58 | 58 | 58 | 58 | 58 | 58 | 70 | 70 |
| Amount (parts by mass) of styrene monomer in third step | 22 | 22 | 22 | 22 | 22 | 22 | 22 | 22 | 22 | 22 | 22 | 22 | 0 | 0 |
| Amount (parts by mass) of styrene monomer in fourth step | 10 | 10 | 10 | 10 | 10 | 10 | 10 | 10 | 10 | 10 | 10 | 10 | 0 | 0 |
| Type of coupling agent in fourth step | - | - | - | - | - | - | - | - | - | - | - | - | DMDCS | TMS |
| Amount (mol/Li) of coupling agent added in fourth step | - | - | - | - | - | - | - | - | - | - | - | - | 0.35 | 0.3 |
| Amount (mol/Li) of methanol added in fourth step | 0.9 | 0.9 | 0.9 | 0.9 | 0.9 | 0.9 | 0.9 | 0.9 | 0.9 | 0.9 | 0.9 | 0.9 | 0 | 0 |
| Styrene content (% by mass) | 42 | 42 | 42 | 42 | 42 | 42 | 42 | 42 | 42 | 42 | 42 | 42 | 31 | 28 |
| Amount (% by mol) of vinyl bond in conjugated diene monomer unit | 35 | 35 | 35 | 35 | 35 | 35 | 35 | 35 | 35 | 35 | 35 | 35 | 10 | 10 |

EP 4 265 646 B1

| | Production Example 1 | Production Example 2 | Production Example 3 | Production Example 4 | Production Example 5 | Production Example 6 | Production Example 7 | Production Example 8 | Production Example 9 | Production Example 10 | Production Example 11 | Production Example 12 | Production Example 13 | Production Example 14 |
|---|---|---|---|---|---|---|---|---|---|---|---|---|---|---|
| Weight average molecular weight ($\times 10^4$) | 25 | 25 | 25 | 25 | 25 | 25 | 25 | 25 | 25 | 25 | 25 | 25 | 17 | 35 |
| Hydrogenation ratio (% by mol) | 95 | 95 | 95 | 95 | 95 | 95 | 95 | 95 | 95 | 95 | 95 | 70 | 0 | 0 |

| | Production Example 15 | Production Example 16 | Production Example 17 | Production Example 18 | Production Example 19 | Production Example 20 | Production Example 21 | Production Example 22 | Production Example 23 | Production Example 24 | Production Example 25 | Production Example 26 | Production Example 27 |
|---|---|---|---|---|---|---|---|---|---|---|---|---|---|
| Block copolymer crumb | 15 | 16 | 17 | 18 | 19 | 20 | 21 | 22 | 23 | 24 | 25 | 26 | 27 |
| Amount (parts by mass) of styrene monomer in first step | 20 | 16 | 15 | 15 | 10 | 10 | 10 | 10 | 10 | 30 | 30 | 31 | 24 |
| Amount (mol/Li) of TMEDA added in first step | 0.05 | 0.05 | 0 | 0 | 0.05 | 0.05 | 0.05 | 0.05 | 0.05 | 0 | 0 | 0 | 0.3 |
| Amount (phm) of Bu-Li added in second step | 0.103 | 0.044 | 0.059 | 0.059 | 0.054 | 0.054 | 0.054 | 0.054 | 0.054 | 0.15 | 0.15 | 0.1 | 0.15 |
| Amount (parts by mass) of butadiene monomer in third step | 58 | 68 | 70 | 70 | 58 | 58 | 58 | 58 | 58 | 70 | 70 | 69 | 76 |
| Amount (parts by mass) of styrene monomer in third step | 22 | 0 | 0 | 0 | 22 | 22 | 22 | 22 | 22 | 0 | 0 | 0 | 0 |
| Amount (parts by mass) of styrene monomer in fourth step | 0 | 16 | 15 | 15 | 10 | 10 | 10 | 10 | 10 | 0 | 0 | 0 | 0 |
| Type of coupling agent in fourth step | TMS | - | - | - | - | - | - | - | - | DMDCS | DMDCS | DMDCS | TMS |
| Amount (mol/Li) of coupling agent added in fourth step | 0.18 | - | - | - | - | - | - | - | - | 0.25 | 0.38 | 0.42 | 0.11 |
| Amount (mol/Li) of methanol added in fourth step | 0.3 | 0.9 | 0.9 | 0.9 | 0.9 | 0.9 | 0.9 | 0.9 | 0.9 | 0 | 0 | 0 | 0.7 |
| Styrene content (% by mass) | 42 | 33 | 29 | 29 | 42 | 42 | 42 | 42 | 42 | 29 | 30 | 31 | 24 |
| Amount (% by mol) of vinyl bond in conjugated diene monomer unit | 35 | 30 | 11 | 11 | 35 | 35 | 35 | 35 | 35 | 11 | 11 | 12 | 34 |
| Weight average molecular weight ($\times 10^4$) | 29 | 28 | 14 | 14 | 25 | 25 | 25 | 25 | 25 | 11 | 12.8 | 14.8 | 12.2 |

EP 4 265 646 B1

(continued)

| | Production Example 15 | Production Example 16 | Production Example 17 | Production Example 18 | Production Example 19 | Production Example 20 | Production Example 21 | Production Example 22 | Production Example 23 | Production Example 24 | Production Example 25 | Production Example 26 | Production Example 27 |
|---|---|---|---|---|---|---|---|---|---|---|---|---|---|
| Hydrogenation ratio (% by mol) | 70 | 99 | 0 | 0 | 95 | 95 | 95 | 95 | 95 | 0 | 0 | 0 | 50 |

[Table 2]

Table 2

| | Production Example 1 | Production Example 2 | Production Example 3 | Production Example 4 | Production Example 5 | Production Example 6 | Production Example 7 | Production Example 8 | Production Example 9 | Production Example 10 | Production Example 11 | Production Example 12 | Production Example 13 | Production Example 14 |
|---|---|---|---|---|---|---|---|---|---|---|---|---|---|---|
| Number of dies | 42 | 42 | 42 | 42 | 42 | 42 | 42 | 42 | 42 | 42 | 42 | 30 | 50 | 42 |
| Number of die holes | 15 | 15 | 15 | 15 | 15 | 15 | 15 | 15 | 15 | 15 | 15 | 37 | 30 | 19 |
| Die hole diameter (mm) | 3 | 3 | 3 | 3 | 3 | 2 | 2 | 2 | 4 | 3 | 3 | 2 | 2 | 3 |
| Feed flow rate (t/hr) of crumb | 3.4 | 3.4 | 3.4 | 3.4 | 3.4 | 3.4 | 3.4 | 3.4 | 3.4 | 3.4 | 3.4 | 3.2 | 3.7 | 4 |
| Total opening portion area (mm$^2$) | 4453 | 4453 | 4453 | 4453 | 4453 | 1979 | 1979 | 1979 | 7917 | 4453 | 4453 | 3487 | 4712 | 5641 |
| Expansion ratio, longitudinal direction | 2.30 | 1.95 | 1.82 | 1.86 | 1.80 | 1.88 | 1.89 | 1.86 | 1.82 | 2.64 | 1.69 | 1.93 | 1.84 | 1.88 |
| Expansion ratio, lateral direction | 1.21 | 1.07 | 1.08 | 1.08 | 1.13 | 1.30 | 1.30 | 1.30 | 1.10 | 1.33 | 1.10 | 1.11 | 1.16 | 1.08 |
| Number of cutter rotations (rpm) | 2200 | 1700 | 1500 | 1310 | 2000 | 2200 | 1600 | 2800 | 750 | 2200 | 850 | 1200 | 1180 | 600 |
| Number of cutter blades | 10 | 10 | 8 | 8 | 8 | 10 | 10 | 12 | 6 | 12 | 6 | 8 | 8 | 8 |
| Specific energy (kWh/kg) | 0.12 | 0.1 | 0.09 | 0.09 | 0.09 | 0.09 | 0.09 | 0.09 | 0.09 | 0.13 | 0.08 | 0.09 | 0.09 | 0.09 |

EP 4 265 646 B1

| | Production Example 15 | Production Example 16 | Production Example 17 | Production Example 18 | Production Example 19 | Production Example 20 | Production Example 21 | Production Example 22 | Production Example 23 | Production Example 24 | Production Example 25 | Production Example 26 | Production Example 27 |
|---|---|---|---|---|---|---|---|---|---|---|---|---|---|
| Number of dies | 42 | 42 | 42 | 42 | 42 | 42 | 42 | 42 | 42 | 12 | 12 | 12 | 30 |
| Number of die holes | 19 | 37 | 19 | 19 | 15 | 15 | 15 | 15 | 15 | 20 | 20 | 20 | 19 |
| Die hole diameter (mm) | 3 | 2 | 3 | 3 | 2 | 2 | 4 | 4 | 3 | 3 | 3 | 3 | 3 |
| Feed flow rate (t/hr) of crumb | 3.5 | 3 | 3 | 4 | 3.4 | 3.4 | 3.4 | 3.4 | 3.4 | 3.9 | 3.8 | 3.6 | 3 |
| Total opening portion area (mm$^2$) | 5641 | 4882 | 5641 | 5641 | 1979 | 1979 | 7917 | 7917 | 4453 | 1696 | 1696 | 1696 | 4029 |
| Expansion ratio, longitudinal direction | 1.81 | 1.81 | 1.86 | 1.65 | 1.91 | 1.91 | 1.94 | 3.11 | 1.49 | 1.33 | 1.42 | 1.11 | 3.61 |
| Expansion ratio, lateral direction | 1.30 | 0.96 | 1.27 | 1.17 | 1.10 | 1.15 | 1.15 | 1.00 | 1.10 | 1.25 | 0.55 | 0.63 | 0.86 |
| Number of cutter rotations (rpm) | 700 | 800 | 800 | 800 | 2000 | 3000 | 800 | 2000 | 450 | 1500 | 1500 | 1500 | 1500 |
| Number of cutter blades | 8 | 8 | 8 | 8 | 8 | 12 | 6 | 10 | 8 | 8 | 8 | 8 | 8 |
| Specific energy (kWh/kg) | 0.09 | 0.09 | 0.09 | 0.09 | 0.09 | 0.09 | 0.09 | 0.14 | 0.07 | 0.13 | 0.14 | 0.15 | 0.11 |

[Table 3]

Table 3

| | Example 1 | Example 2 | Example 3 | Example 4 | Example 5 | Example 6 | Example 7 | Example 8 | Example 9 | Example 10 | Example 11 | Example 12 | Example 13 | Example 14 |
|---|---|---|---|---|---|---|---|---|---|---|---|---|---|---|
| Block copolymer crumb | 1 | 2 | 3 | 4 | 5 | 6 | 7 | 8 | 9 | 10 | 11 | 12 | 13 | 14 |
| Melt flow rate (MFR) | <0.3 | <0.3 | <0.3 | <0.3 | <0.3 | <0.3 | <0.3 | <0.3 | <0.3 | <0.3 | <0.3 | <0.3 | <0.3 | <0.3 |
| Length (mm) | 5.8 | 4.7 | 4.9 | 5.1 | 3.5 | 6 | 8.3 | 4.1 | 7.1 | 6 | 5 | 7.5 | 6.6 | 10.3 |
| Width (mm) | 3.6 | 3.2 | 3.2 | 3.3 | 3.4 | 2.6 | 2.6 | 2.6 | 4.4 | 4 | 3.3 | 2.2 | 2.3 | 3.2 |
| Weight (g) with respect to crumb | 0.0137 | 0.0119 | 0.0159 | 0.0188 | 0.0130 | 0.0130 | 0.0180 | 0.0084 | 0.0440 | 0.0160 | 0.0360 | 0.0119 | 0.0108 | 0.0379 |
| Aspect ratio | 1.60 | 1.46 | 1.52 | 1.57 | 1.03 | 2.31 | 3.19 | 1.58 | 1.61 | 1.50 | 1.52 | 3.38 | 2.85 | 3.11 |
| Volume (mm$^3$) | 59.7 | 38.5 | 40.7 | 42.5 | 31.8 | 31.9 | 44.1 | 21.8 | 108.0 | 75.4 | 42.8 | 29.2 | 28.1 | 84.1 |
| Specific gravity (g/mm$^3$) | 2.3. E-04 | 3.1.E-04 | 3.9. E-04 | 4.4. E-04 | 4.1.E-04 | 4.1.E-04 | 4.1.E-04 | 3.9.E-04 | 4.1.E-04 | 2.1.E-04 | 8.4.E-04 | 4.1.E-04 | 3.8.E-04 | 4.5.E-04 |
| Passing through aperture of 3.35 mm (% by mass) | 98 | 99 | 99 | 99 | 98 | 99 | 99 | 99 | 48 | 55 | 98 | 99 | 97 | 90 |
| Transport efficiency (A/B/C/D) | B | B | B | A | A | B | C | A | C | C | A | C | B | B |
| Blocking ability (A/B/C/D) | B | B | A | A | B | B | C | C | A | C | B | B | B | B |
| Solubility in asphalt (A/B/C/D) | A | A | A | A | A | A | A | A | B | A | C | A | A | B |
| Oil absorption ability (A/B/C/D) | A | A | A | B | A | A | A | A | B | A | C | B | A | B |

| | Example 15 | Example 16 | Example 17 | Example 18 | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|---|---|
| Block copolymer crumb | 15 | 16 | 17 | 18 | 19 | 20 | 21 | 22 | 23 | 24 | 25 | 26 | 27 |
| Melt flow rate (MFR) | <0.3 | <0.3 | <0.3 | <0.3 | <0.3 | <0.3 | <0.3 | <0.3 | <0.3 | 9.0 | 2.3 | <0.3 | 2.3 |
| Length (mm) | 8.6 | 6.6 | 7.9 | 8.2 | 8.2 | 3.65 | 7.3 | 6 | 5 | 6.3 | 5.7 | 5.8 | 4.1 |
| Width (mm) | 3.9 | 1.9 | 3.8 | 3.5 | 2.2 | 2.3 | 4.6 | 4 | 3.3 | 3.7 | 1.6 | 1.9 | 2.6 |
| Weight (g) with respect to crumb | 0.0399 | 0.0085 | 0.0292 | 0.0293 | 0.0130 | 0.0063 | 0.0480 | 0.0140 | 0.0450 | 0.0468 | 0.0094 | 0.0092 | 0.0196 |
| Aspect ratio | 2.21 | 3.44 | 2.08 | 2.34 | 3.73 | 1.59 | 1.59 | 1.50 | 1.52 | 1.69 | 3.48 | 3.06 | 1.58 |
| Volume (mm$^3$) | 103.1 | 19.4 | 89.6 | 78.9 | 31.2 | 15.2 | 121.3 | 75.4 | 42.8 | 69.6 | 12.2 | 16.2 | 21.5 |
| Specific gravity (g/mm$^3$) | 3.9.E-04 | 4.4.E-04 | 3.3.E-04 | 3.7.E-04 | 4.2.E-04 | 4.2.E-04 | 4.0.E-04 | 1.9.E-04 | 1.1.E-03 | 6.7.E-04 | 7.7.E-04 | 5.7.E-04 | 9.1.E-04 |
| Passing through aperture of 3.35 mm (% by mass) | 41 | 99 | 98 | 99 | 99 | 99 | 35 | 58 | 98 | 93 | 99 | 99 | 99 |
| Transport efficiency (A/B/C/D) | B | C | B | B | C | A | D | D | A | A | D | C | C |
| Blocking ability (A/B/C/D) | B | C | B | B | D | D | A | D | A | A | D | D | B |
| Solubility in asphalt (A/B/C/D) | B | B | B | A | A | A | C | A | D | D | C | C | D |
| Oil absorption ability (A/B/C/D) | B | A | B | B | B | B | D | A | D | D | C | C | D |

**Claims**

1. A crumb of a block copolymer or a hydrogenated product thereof, comprising

   a polymer block A mainly containing a vinyl aromatic monomer unit,
   a polymer block B mainly containing a conjugated diene monomer unit, and/or a polymer block C consisting of a vinyl aromatic monomer unit and a conjugated diene monomer unit, wherein
   the following (1) to (6) are satisfied:

   (1) an average weight value per crumb is 0.0080 to 0.0500 g,
   (2) an average aspect ratio value per crumb, calculated as described in "<Method for calculating aspect ratio of crumb>" the description, is 1.00 to 3.50,
   (3) an average volume value per crumb, calculated as described in "<Method for calculating volume of crumb>" the description, is 18.0 to 110 mm$^3$,
   (4) an average specific gravity value per crumb, calculated as described in "<Method for calculating specific gravity of crumb>" the description, is $2.0 \times 10^{-4}$ to $1.0 \times 10^{-3}$ g/mm$^3$,
   (5) a component passing through a sieve with an aperture of 3.35 mm corresponds to 41% by mass or more of the entire crumb, the value being determined as described in "<Evaluation of grain size of crumb>" in the description, and
   (6) a melt flow rate of the crumb, measured as described in "<Melt flow rate (MFR)>" in the desription, is 0.3 g/10 min or less.

2. The crumb according to claim 1, wherein the average weight value per crumb is 0.0100 to 0.0300 g.

3. The crumb according to claim 1 or 2, wherein the average weight value per crumb is 0.0120 to 0.0200 g.

4. The crumb according to any one of claims 1 to 3, wherein the average volume value per crumb is 20.0 to 90.0 mm$^3$.

5. The crumb according to any one of claims 1 to 4, wherein the average volume value per crumb is 20.0 to 80.0 mm$^3$.

6. The crumb according to any one of claims 1 to 5, wherein the average specific gravity value per crumb is $2.0 \times 10^{-4}$ to $5.0 \times 10^{-4}$ g/mm$^3$.

7. The crumb according to any one of claims 1 to 6, wherein the average aspect ratio value per crumb is 1.00 to 1.60.

8. The crumb according to any one of claims 1 to 7, wherein

   a content of the vinyl aromatic monomer unit in the block copolymer or the hydrogenated product thereof, determined as described in "<Content (styrene content) of vinyl aromatic monomer unit in polymer>" in the description, is 20 to 50% by mass,
   an amount of a vinyl bond in the conjugated diene monomer unit, determined as described in "<Amount of vinyl bond in polymer and hydrogenation ratio of double bond in conjugated diene monomer unit>" in the description, is 5 to 50% by mol, and
   a weight average molecular weight is 100000 to 500000.

9. An asphalt composition comprising

   0.5 to 50 parts by mass of the crumb according to any one of claims 1 to 8, and
   100 parts by mass of asphalt.

**Patentansprüche**

1. Krümel eines Blockcopolymers oder eines hydrierten Produkts davon, umfassend

   einen Polymerblock A, der hauptsächlich eine vinylaromatische Monomereinheit enthält,
   einen Polymerblock B, der hauptsächlich eine konjugierte Dienmonomereinheit enthält, und/oder einen Polymerblock C, der aus einer vinylaromatischen Monomereinheit und einer konjugierten Dienmonomereinheit besteht, wobei
die folgenden Punkte (1) bis (6) erfüllt sind:

(1) der mittlere Gewichtswert pro Krümel beträgt 0,0080 bis 0,0500 g,
(2) der mittlere Aspektverhältniswert pro Krümel, berechnet wie in der Beschreibung unter <Methode zur Berechnung des Aspektverhältnis von Krümeln> " beschrieben, beträgt 1,00 bis 3,50,
(3) der mittlere Volumenwert pro Krümel, berechnet wie in der Beschreibung unter "<Methode zur Berechnung des Volumens von Krümeln>" beschrieben, beträgt 18,0 bis 110 mm$^3$,
(4) der Wert der mittleren spezifischen Dichte pro Krümel, berechnet wie in der Beschreibung unter "<Methode zur Berechnung der spezifischen Dichte von Granulatkrümeln >", beträgt $2,0 \times 10^{-4}$ bis $1,0 \times 10^{-3}$ g/mm$^3$,
(5) eine Komponente, die durch ein Sieb mit einer Öffnung von 3,35 mm hindurchgeht, entspricht 41 Massen-% oder mehr der gesamten Krümel, wobei der Wert wie unter "<Bewertung der Korngröße von Krümeln>" in der Beschreibung beschrieben bestimmt wird, und
(6) die Schmelzfließrate der Krümel, gemessen wie unter "<Schmelzfließrate (MFR)>" in der Beschreibung beschrieben, ist 0,3 g/10 min oder weniger.

2. Krümel nach Anspruch 1, wobei der mittlere Gewichtswert pro Krümel 0,0100 bis 0,0300 g beträgt.

3. Krümel nach Anspruch 1 oder 2, wobei der mittlere Gewichtswert pro Krümel 0,0120 bis 0,0200 g beträgt.

4. Krümel nach einem der Ansprüche 1 bis 3, wobei der mittlere Volumenwert pro Krümel 20,0 bis 90,0 mm$^3$ beträgt.

5. Krümel nach einem der Ansprüche 1 bis 4, wobei der mittlere Volumenwert pro Krümel 20,0 bis 80,0 mm$^3$ beträgt.

6. Krümel nach einem der Ansprüche 1 bis 5, wobei der mittlere Wert der spezifischen Dichte pro Krümel $2,0 \times 10^{-4}$ bis $5,0 \times 10^{-4}$ g/mm$^3$ beträgt.

7. Krümel nach einem der Ansprüche 1 bis 6, wobei der mittlere Aspektverhältniswert pro Krümel 1,00 bis 1,60 beträgt.

8. Krümelnach einem der Ansprüche 1 bis 7, wobei

der Gehalt der vinylaromatischen Monomereinheit in dem Blockcopolymer oder dem hydrierten Produkt davon, bestimmt wie unter "<Gehalt (Styrolgehalt) der vinylaromatischen Monomereinheit im Polymer>" in der Beschreibung beschrieben, 20 bis 50 Massen-% beträgt,
die Vinylbindungsmenge in der konjugierten Dienmonomereinheit, bestimmt wie in "<Vinylbindungsmenge im Polymer und Hydrierungsgrad von Doppelbindungen in der konjugierten Dienmonomereinheit>" in der Beschreibung beschrieben, 5 bis 50 Mol-% beträgt, und
das gewichtsmittlere Molekulargewicht 100000 bis 500000 ist.

9. Asphalt- bzw. Bitumenzusammensetzung, umfassend:

0,5 bis 50 Massenteile der Krümel nach einem der Ansprüche 1 bis 8, und
100 Massenteile Asphalt bzw. Bitumen.

**Revendications**

1. Granulé d'un copolymère séquencé ou d'un produit hydrogéné de celui-ci, comprenant

une séquence de polymère A contenant principalement un motif monomère vinylique aromatique,
une séquence de polymère B contenant principalement un motif monomère diène conjugué, et/ou une séquence de polymère C constituée d'un motif monomère vinylique aromatique et d'un motif monomère diène conjugué, dans lequel
les points (1) à (6) suivants sont satisfaits :

(1) une valeur de poids moyen par granulé est de 0,0080 à 0,0500 g,
(2) une valeur de rapport de dimensions moyen par granulé, calculée tel que décrit dans « <Procédé de calcul du rapport de dimensions de granulé> » de la description, est de 1,00 à 3,50,

(3) une valeur de volume moyen par granulé, calculée tel que décrit dans « <Procédé de calcul du volume de granulé> » de la description, est de 18,0 à 110 mm$^3$,

(4) une valeur de masse volumique spécifique moyenne par granulé, calculée tel que décrit dans « <Procédé de calcul de la masse volumique spécifique de granulé> » de la description, est de 2,0 × 10$^{-4}$ à 1,0 × 10$^{-3}$ g/mm$^3$,

(5) un composant passant à travers un tamis ayant une ouverture de 3,35 mm correspond à 41 % en masse ou plus du granulé entier, la valeur étant déterminée tel que décrit dans « <Évaluation de la taille de grain du granulé> » dans la description, et

(6) une vitesse d'écoulement du granulé, mesurée tel que décrit dans « <Vitesse d'écoulement (MFR)> » dans la description, est de 0,3 g/10 min ou moins.

2. Granulé selon la revendication 1, dans lequel la valeur de poids moyen par granulé est de 0,0100 à 0,0300 g.

3. Granulé selon la revendication 1 ou 2, dans lequel la valeur de poids moyen par granulé est de 0,0120 à 0,0200 g.

4. Granulé selon l'une quelconque des revendications 1 à 3, dans lequel la valeur de volume moyen par granulé est de 20,0 à 90,0 mm$^3$.

5. Granulé selon l'une quelconque des revendications 1 à 4, dans lequel la valeur de volume moyen par granulé est de 20,0 à 80, 0 mm$^3$.

6. Granulé selon l'une quelconque des revendications 1 à 5, dans lequel la valeur de masse volumique spécifique moyenne par granulé est de 2,0 × 10$^{-4}$ à 5,0 × 10$^{-4}$ g/mm$^3$.

7. Granulé selon l'une quelconque des revendications 1 à 6, dans lequel la valeur de rapport de dimensions moyen par granulé est de 1,00 à 1,60.

8. Granulé selon l'une quelconque des revendications 1 à 7, dans lequel

une teneur du motif monomère vinylique aromatique dans le copolymère séquencé ou le produit hydrogéné de celui-ci, déterminée tel que décrit dans « <Teneur (teneur en styrène) du motif monomère vinylique aromatique dans le polymère> » dans la description, est de 20 à 50 % en masse,

une quantité d'une liaison vinyle dans le motif monomère diène conjugué, déterminée tel que décrit dans « <Quantité de liaison vinyle dans le polymère et rapport d'hydrogénation de double liaison dans le motif monomère diène conjugué> » dans la description, est de 5 à 50 % en moles, et

un poids moléculaire moyen en poids est de 100 000 à 500 000.

9. Composition d'asphalte comprenant

0,5 à 50 parties en masse du granulé selon l'une quelconque des revendications 1 à 8, et
100 parties en masse d'asphalte.

33

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3310536 B
- JP 6345703 B
- JP 5591346 B
- JP 4798333 B
- JP 11315187 A
- JP 6483529 B
- JP 3619286 B
- JP 4317979 B
- JP 46032415 A
- JP 49036957 A
- JP 48002423 A

- JP 48004106 A
- JP 51049567 A
- JP 59166518 A
- JP 428704 A
- JP 436636 A
- JP 63004841 A
- JP 1037970 A
- JP 1053851 A
- JP 2009041 A
- JP 8109219 A

**Non-patent literature cited in the description**

- **I. M. KOLTHOFF et al.** *J. Polym. Sci.,* 1946, vol. 1, 429